Europäisches Patentamt

European Patent Office

Office européen des brevets

(19)

(11) Veröffentlichungsnummer: **0 289 015 B1**

# (12) EUROPÄISCHE PATENTSCHRIFT

(45) Veröffentlichungstag der Patentschrift: **19.11.92**

(21) Anmeldenummer: **88106812.6**

(22) Anmeldetag: **28.04.88**

(51) Int. Cl.$^5$: **D21B 1/08**

(54) Schneckenpresse sowie Verfahren zur Umformung von Abfallpapier in handhabbare Presslinge.

(30) Priorität: **01.05.87 DE 3714587**

(43) Veröffentlichungstag der Anmeldung:
**02.11.88 Patentblatt 88/44**

(45) Bekanntmachung des Hinweises auf die
Patenterteilung:
**19.11.92 Patentblatt 92/47**

(84) Benannte Vertragsstaaten:
**AT BE CH DE ES FR GB IT LI NL SE**

(56) Entgegenhaltungen:
**DE-A- 1 813 501**
**FR-A- 2 384 060**
**US-A- 3 986 845**
**US-A- 4 123 489**
**US-A- 4 148 952**

(73) Patentinhaber: **Alois Pöttinger Maschinenfabrik GmbH**

**A-4710 Grieskirchen(AT)**

(72) Erfinder: **Frauscher, Josef**

**A-4942 Gurten 50(AT)**
Erfinder: **Schremmer, Wolfgang**

**A-4062 Thening 50(AT)**

(74) Vertreter: **Dupal, Helmut, Dipl-Ing.**
**Jägerweg 12**
**A-4702 Wallern(AT)**

## Beschreibung

Die Erfindung betrifft ein Verfahren zur Umformung von Abfallpapier in handhabbare Preßlinge nach dem Oberbegriff des Anspruches 1 und eine Schneckenpresse zur Ausführung des Verfahrens.

Aus der US-A-4 123 489 (Kelley) ist eine Anlage zur Herstellung von Preßlingen aus Abfallpapier bekannt geworden, bei der das eingesetzte Abfallpapier zerkleinert und anschließend, nach einer Zwischenlagerung einer Pellet Presse zugeführt wird, wobei die Anfeuchtung des Abfallpapiers in einem Mischer, unmittelbar vor dessen Eintritt in die Pellet Presse erfolgt.

In der US-A-4 148 952 (Nelson et al.) ist ein Verfahren zur Herstellung von Preßlingen beschrieben, bei dem das Abfallpapier zuerst zerkleinert, anschließend befeuchtet und über einen Staubabscheider in einen Dosierer transportiert wird, an dessen Ausgang eine wässrige Lösung eines Bindemittels eingedüst wird.

Das Abfallpapier gelangt in eine Pellet Presse, in der das Preßgut aufgeheizt wird und anschließend bei Aufrechterhaltung der Temperatur des Preßgutes verdichtet wird. Nach dem Ausstoß der Preßlinge in einen Lagerbehälter wird die in den Preßlingen enthaltene Feuchtigkeit durch Ausdunsten wieder abgegeben.

Die Aufgabe der Erfindung ist es eine Verbesserung der Bindung des Abfallpapiers beim Formen zu Preßlingen, möglichst bei allen Sorten von Abfallpapier zu erreichen, damit ein besser handhabbares Schüttgut erzielt wird und eine Vorrichtung für die Durchführung des Verfahrens zu schaffen, mit der das verbesserte Verfahren mit einfacheren Mitteln und/oder zuverlässiger erreicht wird.

Die Erfindung löst diese Aufgabe mit einem Verfahren gemäß dem kennzeichnenden Teil des Anspruches 1 und einer Vorrichtung gemäß dem kennzeichnenden Teil des Anspruches 4.

Die Unteransprüche, die gleichzeitig einen Bestandteil der Beschreibung bilden, beziehen sich auf besonders vorteilhafte Ausgestaltungen des Verfahrens und der Vorrichtung zu dessen Durchführung.

Durch die Merkmale des Verfahrens nach Anspruch 1 ist die Zugabe des Wassers bezogen auf die durchlaufende Menge an Abfallpapier genauer einstellbar, wodurch dem Abfallpapier gerade die für die Lösung der Leimbindung notwendige Wassermenge zugesetzt werden kann und eine Überdosierung durch Zusatz während der Umkehrung des Fördervorganges vermieden wird.

Für die Herstellung einer besonders guten Bindung des Abfallpapiers bei der Formung zu Preßlingen ist es vorteilhaft den Fördervorgang in einen ersten Fördervorgang, bei dem gleichzeitig eine weitere Nachzerkleinerung in Form eines Aufschlußes des Abfallpapiers stattfindet und einen zweiten Fördervorgang aufzuteilen.

Weiters ist es günstig, wenn beim Aufschlagen des Abfallpapiers vor oder während dieses Vorganges, ein Teil des Wassers zugesetzt wird, so daß eine erste Benetzung und Quellung längere Zeit vor dem Misch-und Verdichtungsvorgang stattfindet und eine tiefgreifendere, festere Bindung beim Verformen ermöglicht.

Besonders einfach und günstig wird das Verfahren mit einer Schneckenpresse verwirklicht, bei der die Merkmale des Anspruches 4 verwirklicht sind, weil der dort angegebene Anbringungsort der Düse für das Einspritzen des Wassers vor Ausübung des Preßdruckes die Benetzung und die Lösung der Leimbindung des Abfallpapiers begünstigt, sodaß im Misch-und Verdichtungsvorgang die Beschaffenheit der geformten Preßlinge verbessert wird.

Dabei ist es besonders bei schwach geleimtem, saugfähigem Abfallpapier von Vorteil die Düse für das Wasser an einer Wandung des Schneckentroges anzubringen, an dem sich die Schnecke beim Fördervorgang nach unten dreht, aber auch das Wasser unmittelbar vor dem konischen Mundstück der Schneckenpresse einzudüsen.

Eine besonders genaue Regelung des Wasserzusatzes ist möglich bei Anwendung eines elektromagnetischen Regelventiles zur Regelung der Durchflußmenge in direkter oder indirekter Abhängigkeit von der, die Schneckenpresse durchlaufenden Menge an Abfallpapier.

Eine wirksame Verbesserung der Vorrichtung besteht dabei in der Anwendung eines Regelventiles zur Herstellung eines konstanten niedrigen Druckes, insbesonders bei Anschluß an eine Netzwasserleitung und in der Anwendung eines Steuerventiles zum Absperren der Zuleitung während des Stillstandes der Schneckenpresse oder deren Rücklaufes nach Belastungsüberschreitungen des Antriebes.

Besonders wichtig ist es die Zufuhr des Wassers während des Stillstandes oder des Rücklaufes der Schneckenpresse zu sperren, wobei es besonders günstig ist, wenn das Steuerventil stromlos sperrt.

Besonders vorteilhaft ist es das Wasser erst gegen Ende des Fördervorganges zuzusetzen, damit nicht zu große Mengen befeuchteten Materials vorhanden isnd, die bei Unterbrechung des Verfahrens ansonsten zu Verstopfungen Anlaß geben können.

Günstig ist es das Zusatzwasser zu erwärmen, um durch verringerte Viskosität und höhere Lösungsgeschwindigkeit der Bindemittel Leimung zu erreichen, um dadurch eine umso festere Bindung herstellen zu können.

Zur Verbesserung des Bindungsverhaltens während des Misch-und Verdichtungsvorganges und zur weiteren Verbesserung der Lösung des Papierleimes im Abfallpapier ist es vorteilhaft Papierleimungsmittel als einzelne Stoffe oder im Gemisch zuzusetzen, wie sie bei der Papierbereitung Anwendung finden und/oder Lösungsmittel zur besonders raschen Quellung und/oder Lösung der im Abfallpapier enthaltenen Bindemittel zu erreichen, wobei besonders Abfallstoffe wie sie bei der Zellstoffgewinnung, z.B. in Form von Dicklauge, anfallen, Verwendung finden können.

Die Erfindung wird an Hand der Zeichnung eines Ausführungsbeispieles beschrieben.

Es zeigt:

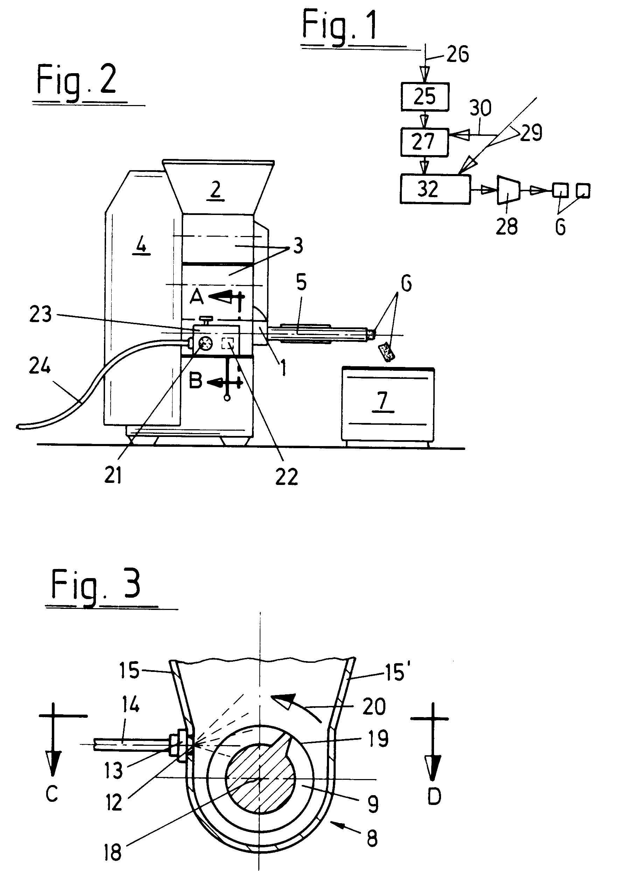

Fig. 1    den Verlauf des Verfahrens schematisch,

Fig. 2    eine Seitenansicht der erfindungsgemäßen Schneckenpresse mit Zerkleinerer,

Fig. 3    einen Ausschnitt aus Fig. 2 nach A-B,

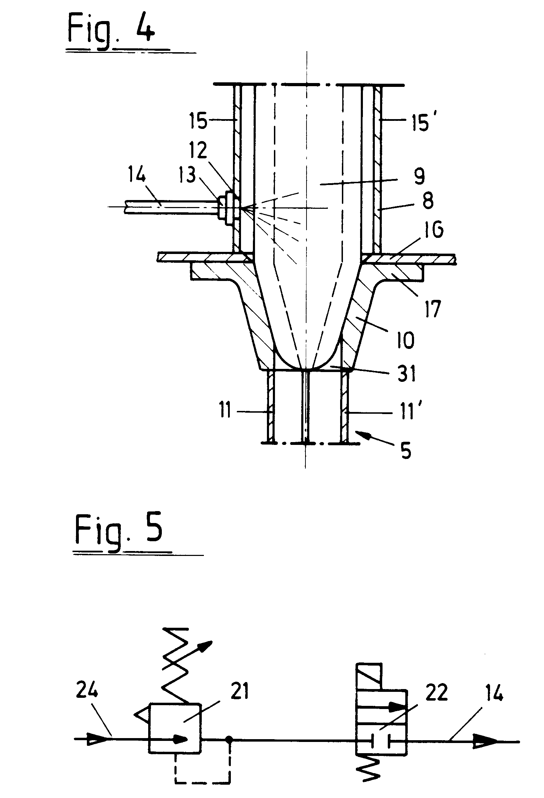

Fig. 4    eine Draufsicht auf einen Ausschnitt nach C-D und

Fig. 5    die Schaltanordnung für die Wasserzuleitung.

Das fortlaufende Verfahren beginnt mit einem vorangestellten Zerkleinerungsvorgang 25 von dem das kleinteilige Abfallpapier 26 in dem ersten Teil 27 eines Fördervorganges gleichzeitig einem Nachzerkleinerungsvorgang unterworfen ist, an dessen Beginn ein Teil 30 des Wassers 29 zugesetzt wird. Danach wird das Abfallpapier 26 in einem weiteren Teil 32 des Fördervorganges, an dessen Ende der Zusatz der Hauptmenge des Wassers 29 erfolgt, dem Misch-und Verdichtungsvorgang 28 unterworfen, den das Abfallpapier 26 in Form von Preßlingen 6 verläßt.

Die Vorrichtung zur Durchführung dieses Verfahrens besteht aus einer Schneckenpresse 1, der in einem Rahmen 3 ein Zerkleinerer und ein Nachzerkleinerer und Förderer vorgeordnet ist, in die das Abfallpapier 26 aus dem Einfülltrichter 2 gelangt.

Der Schneckenpresse 1 nachgeschaltet ist eine Zangenpresse 5, aus der die Preßlinge 6 austreten und in den Behälter 7 fallen.

Das zugesetzte Wasser gelangt von der Zuleitung 24 aus der Netzwasserleitung in ein Steuergerät 23, das ein Regelventil 21 zur Herabsetzung des Wasserdruckes von gewöhnlich 6 bar auf etwa 2 bar und ein elektromagnetisch von den Schaltmitteln des Antriebes der Vorrichtung, der sich hinter der Verkleidung 4 befindet, her ansteuerbares Steuerventil 22 umfaßt, von dem das Wasser über die Zuleitung 14 in die Düse 12 gelangt und auf das Abfallpapier 26 in dem Schneckentrog 8 aufgesprüht wird.

Das Steuerventil 22 ist so geschaltet, daß es in stromlosem Zustand schließt und während des Betriebes sowohl bei Stillstand als auch bei Rücklauf der Schneckenpresse 1 stromlos wird, so daß nur während des Fördervorganges 27 Wasser zugesetzt wird.

Die Schneckenpresse 1 umfaßt einen Schneckentrog 8, in dem ein zylindrischer Schneckenteil 9 läuft und ein konisches Mundstück 10, in dem sich ein konischer Schneckenteil befindet. Die Schnecke ist einseitig gelagert und in der Drehrichtung 20 angetrieben.

Die Düse 12 ist in jene Wandung 15 der beiden Wandungen 15, 15' des Schneckentroges 8 eingesetzt und mit der Verschraubung 13 verschraubt, an dessen Seite sich die Schnecke nach unten dreht.

Dabei ist die Düse 12 der Höhe nach oberhalb der Längsachse 18 des zylindrischen Schneckenteiles 9 und unterhalb des Umfanges 19 des zylindrischen Schneckenteiles 9 angeordnet.

Der Schneckentrog 8 ist mit einem Flansch 16 versehen, an den der Flansch 17 des konischen Mundstückes 10 angeflanscht ist. Das konische Mundstück 10 ist mit einer Öffnung 31 für den Austritt der geformten Preßlinge 6 versehen, an die sich unmittelbar die beiden Backen 11,11′ der Zangenpresse 5 anschließen.

Legende : EM 81 002

| | |
|---|---|
| 1 | Schneckenpresse |
| 2 | Einfülltrichter |
| 3 | Rahmen mit Zerkleinerungsvorrichtung und Zwischenförderer |
| 4 | Verkleidung des Antriebes |
| 5 | Zangenpresse |
| 6 | Preßlinge |
| 7 | Behälter |
| 8 | Schneckentrog |
| 9 | zylindrischer Schneckenteil |
| 10 | konisches Mundstück |
| 11,11' | Backen der Zangenpresse 5 |
| 12 | Düse |
| 13 | Verschraubung |
| 14 | Zuleitung |
| 15,15' | Wandung des Schneckentroges 8 |
| 16 | Flansch des Schneckentroges 8 |
| 17 | Flansch des konischen Mundstückes 10 |
| 18 | Längsachse des zylindrischen Schneckenteiles 9 |
| 19 | Umfang des zylindrischen Schneckenteiles 9 |
| 20 | Drehrichtung des zylindrischen Schneckenteiles 9 während des Fördervorganges |
| 21 | Regelventil |
| 22 | Steuerventil |
| 23 | Steuerteil mit Regelventil 21 und |

Steuerventil 22

24 Zuleitung von der Wasserversorgung

25 Zerkleinerungsvorgang

26 Abfallpapier für die Verwertung

27 erster Teil des Fördervorganges mit Nachzerkleinerung und Zusatz eines Teiles des Wassers 30

28 Misch-und Verdichtungsvorgang

29 Wasser für den Zusatz am Ende des Fördervorganges 27

30 Teil des Wassers 29 für den Nachzerkleinerungsvorgang

31 Öffnung

32 zweiter Teil des Fördervorganges 27 mit Nachzerkleinerung und Zusatz eines Teiles des Wassers 30

**Patentansprüche**

1. Fortlaufendes Verfahren zur Umformung von Abfallpapier (26) in handhabbare Preßlinge (6), dem ein Zerkleinerungsvorgang (25) vorgeschaltet ist, bei dem Abfallpapier (26) kleinteilig geschnitten und zerrissen nach einem Fördervorgang (27) einem Misch-und Verdichtungsvorgang (28) unterworfen wird und zumindest vor dessen Beginn Wasser (29,30) abgestimmt auf die Menge des durchgesetzten Abfallpapiers unter Druck zur teilweisen Benetzung der Fasern, Quellung oder Lösung des Papierleimes des zerkleinerten Abfallpapiers (26) eingedüst wird, worauf unter Einwirkung der auftretenden Reibungswärme bei einer Temperatur zwischen 50 und 100° C die neuerliche Verbindung des zerkleinerten, befeuchteten Abfallpapiers (26) zu Preßlingen (6) erfolgt, dadurch gekennzeichnet, daß das Wasser (29,30) nur während des Fördervorganges (27) in Richtung auf den nachgeschalteten Misch-und Verdichtungsvorgang (28) zu eingedüst wird.

2. Fortlaufendes Verfahren zur Umformung von Abfallpapier (26) in handhabbare Preßlinge (6) nach dem vorhergehenden Anspruch, dadurch gekennzeichnet, daß der zwischen dem Zerkleinerungsvorgang (25) und dem Misch- und Verdichtungsvorgang (28) liegende Fördervorgang (27) in zwei Fördervorgänge aufgeteilt ist, von denen der erste Fördervorgang gleichzeitig einen Nachzerkleinerungsvorgang in Form eines mechanischen Aufschlußvorganges für das Abfallpapier (26) bildet.

3. Fortlaufendes Verfahren zur Umformung von Abfallpapier (26) in handhabbare Preßlinge (6) nach dem vorhergehenden Anspruch, dadurch gekennzeichnet, daß während des ersten Fördervorganges (27) wenigstens ein Teil (30), vorzugsweise ein Viertel bis zur Hälfte, des zum Abfallpapier (26) zugesetzten Wassers vor oder während des Nachzerkleinerungsvorganges eingedüst wird.

4. Vorrichtung zur Durchführung des fortlaufenden Verfahrens nach einem oder mehreren der vorhergehenden Ansprüche, bei dem der Fördervorgang (27) im Schneckentrog (8) einer Schneckenpresse (1), in dem ein zylindrischer Schneckenteil (9) angeordnet ist und der Misch- und Verdichtungsvorgang (28) in dem anschließenden konischen Mundstück (10), in dem ein konischer Schneckenteil (33) angeordnet ist, vor sich geht, an den eine Zangenpresse (5) zur Regelung des Preßdruckes anschließend angeordnet ist, dadurch gekennzeichnet, daß zum Eindüsen des Wassers eine Düse (12) in die Wandung (15,15') des Schneckentroges (8) eingesetzt ist, die bezogen auf dessen axiale Erstreckung im letzten Drittel vor dem konischen Mundstück (10) und in Zufuhrrichtung des Abfallpapiers zum Schneckentrog hin gesehen, oberhalb der Längsachse (18) des zylindrischen Schneckenteiles (9) an dessen Umfang (19) angebracht ist und mit Wasser beaufschlagt wird, das mittels eines Regelventils (21) auf einen bestimmten, voreinstellbaren, herabgesetzten geringen Druck zwischen 1,5 und 2,5 bar gebracht wird und dessen Zuleitung (14) durch ein Steuerventil unterbrochen wird, wenn der Fördervorgang (27) unterbrochen wird oder nicht in Richtung auf den Misch- und Verdichtungsvorgang (28) hin abläuft.

5. Vorrichtung nach Anspruch 4, dadurch gekennzeichnet, daß die Düse (12) in der Wandung (15) dort angebracht ist, wo der zylindrische Schneckenteil (9) während des Fördervorganges (27) nach unten dreht.

6. Vorrichtung nach Anspruch 4, dadurch gekennzeichnet, daß das Wasser in einer, von einem elektromagnetischen Regelventil anstelle des Regelventiles (21), geregelten Menge in der Zeiteinheit eingedüst wird, dessen Regelgrößen entweder von einem Meßwertgeber über die Messung der Antriebsleistung des Getriebes der Schneckenpresse (1), vorzugsweise von der elektrischen Stromstärke oder von einem Mengenmesser über die Messung der Menge der hergestellten Preßlinge (6) in der Zeiteinheit abgeleitet und als elektrische Signale dem Regler des Regelventiles (21) zugeleitet werden.

7. Vorrichtung nach Anspruch 4, dadurch gekennzeichnet, daß das Steuerventil (22) elektromagnetisch vom Antrieb der Schneckenpresse (1) betätigbar ist und stromlos schließt, wobei es während der Ausführung des Verfahrens sowohl bei Stillstand als auch bei Rücklauf der Förderschnecke stromlos geschaltet ist.

**8.** Vorrichtung nach Anspruch 4, dadurch gekennzeichnet, daß bei unterteiltem Fördervorgang der erste Teil des Fördervorganges (27) von einem oberhalb des Schneckentroges (8) angeordneten angetriebenen Zwischenförderer durchgeführt wird, der gleichzeitig eine Zerkleinerungsstrecke durchläuft, zu deren Beginn oder innerhalb derer eine zweite Düse angeordnet ist, über die ein Teil des Wassers (30) zugesetzt wird.

**Claims**

**1.** A continuous method for transforming waste paper (26) into manageable briquettes (6), said method following a comminuting process (25), in which after a conveying process (27), the waste paper (26) cut and torn into small pieces undergoes a mixing and compressing process (28) and at least prior to the start of the mixing and compressing process water (29, 30) is sprayed in under pressure in a quantity adapted to the quantity of waste paper passing through in order to partially wet the fibres and soak or dissolve the paper glue of the comminuted waste paper (26), and the new connection of the comminuted moistened waste paper (26) subsequently being effected to form briquettes (6) under the action of the generated frictional head at a temperature between 50 and 100°C, characterised in that water (29, 30) is only sprayed in during the conveying process (27) in the direction of the downstream mixing and compressing process (28).

**2.** A continuous method for transforming waste paper (26) into manageable briquettes (6) according to the preceding claim, characterised in that the conveying process (27) lying between the comminuting process (25) and the mixing and compressing process (28) is divided into two conveying processes, the first conveying process simultaneously forming a secondary comminuting process in the form of a mechanical breaking-up process for the waste paper (26).

**3.** A continuous method for transforming waste paper (26) into manageable briquettes (6) according to the preceding claim, characterised in that during the first conveying process (27) at least part (30), preferably a quarter to a half, of the water added to the waste paper (26) is sprayed in before or during the secondary comminuting process.

**4.** A device for carrying out the continuous method according to one or more of the preceding claims, in which the conveying process (27) is carried out in a screw trough (8) of a screw press (1), in which a cylindrical screw element (9) is arranged, and the mixing and compressing process (28) is carried out in the adjoining conical mouthpiece (10), in which a conical screw element (33) is arranged, followed by a collet press (5) for controlling the molding pressure, characterised in that a nozzle (12) for spraying in the water is inserted in the wall (15, 15') of the screw trough (8) and in relation to the axial extension of said screw trough is arranged in the last third upstream of the conical mouthpiece (10) and viewed in the supply direction of the waste paper towards the screw trough above the longitudinal axis (18) of the cylindrical screw element (9) on the latter's circumference (19) and is acted upon by water, which is brought by means of a control valve (21) to a given, predeterminable, reduced low pressure of between 1.5 and 2.5 bar and whose supply line (14) is interrupted by a control valve when the conveying process (27) is interrupted or does not run in the direction of the mixing and compressing process (28).

**5.** A device according to claim 4, characterised in that the nozzle (12) in the wall (15) is arranged at the point where the cylindrical screw element (9) rotates downwards during the conveying process (27).

**6.** A device according to Claim 4, characterised in that the water is sprayed in in a quantity controlled by a electromagnetic control valve instead of the control valve (21) within a unit of time, the control values of said electromagnetic control valve being derived either by a measurement transmitter from the measurement of the drive power of the gearing of the screw press (1), preferably from the electrical current intensity or by a quantity measuring device from the measurement of the quantity of briquettes (6) manufactured within the unit of time and being supplied as electrical signals to the regulator of the control valve (21).

**7.** A device according to claim 4, characterised in that the control valve (22) can be actuated electromagnetically by the drive of the screw press (1), closes in a current-free manner and is switched in said current-free manner as the process is carried out both during standstill and reversal of the conveying screw.

8. A device according to claim 4, characterised in that, in the case of the divided conveying process, the first part of the conveying process (27) is carried out by a driven intermediate conveyor arranged above the screw trough, which simultaneously passes through a comminuting stretch, at the start of which or within which a second nozzle is arranged, through which part of the water (30) is added.

**Revendications**

1. Procédé continu pour transformer du papier de rebut (26) en des blocs comprimés maniables (6), en amont duquel est prévu un processus de fragmentation (25) au cours duquel du papier de rebut (26) est sectionné en petits morceaux et rompu, puis est soumis, après un processus de convoyage (27), à un processus (28) de mélangeage et de compactage et, au moins avant le stade initial de ce processus, de l'eau (29, 30) coordonnée avec la quantité du papier de rebut débité est injectée par pulvérisation sous pression, pour provoquer l'imprégnation partielle des fibres, le gonflement ou la dissolution de la colle du papier de rebut fragmenté (26), après quoi, sous l'action de la chaleur de frottement engendrée et à une température comprise entre 50 et 100°C, s'opère la nouvelle liaison du papier de rebut (26) fragmenté et humidifié, pour donner des blocs comprimés (6), caractérisé par le fait que l'eau (29, 30) est injectée par pulvérisation, uniquement au cours du processus de convoyage (27), en direction du processus (28) de mélangeage et de compactage prévu en aval.

2. Procédé continu pour transformer du papier de rebut (26) en des blocs comprimés maniables (6), selon la revendication précédente, caractérisé par le fait que le processus de convoyage (27), intercalé entre le processus de fragmentation (25) et le processus (28) de mélangeage et de compactage, est scindé en deux processus de convoyage parmi lesquels le premier processus de convoyage représente simultanément un processus de post-fragmentation, sous la forme d'un processus de désintégration mécanique du papier de rebut (26).

3. Procédé continu pour transformer du papier de rebut (26) en des blocs comprimés maniables (6), selon la revendication précédente, caractérisé par le fait que, au cours du premier processus de convoyage (27), au moins une part (30), de préférence entre un quart et la moitié de l'eau ajoutée au papier de rebut (26), est injectée par pulvérisation avant ou pendant le processus de post-fragmentation.

4. Dispositif pour la mise en oeuvre du procédé continu selon l'une ou plusieurs des revendications précédentes, dans lequel le processus de convoyage (27) se déroule dans l'auge (8) de la vis d'une presse (1) à vis, dans laquelle est logée une partie hélicoïdale cylindrique (9), et le processus (28) de mélangeage et de compactage se déroule dans l'embout tronconique attenant (10) logeant une partie hélicoïdale tronconique (33) dans la continuité de laquelle une presse (5) à mâchoires est installée en vue de réguler la pression de compression, caractérisé par le fait qu'une buse (12) est intégrée dans la paroi (15, 15') de l'auge (8) de la vis en vue de l'injection de l'eau par pulvérisation, ladite buse étant disposée, par rapport à l'étendue axiale de ladite auge, dans le dernier tiers avant l'embout tronconique (10) et étant située, en considérant le sens d'amenée du papier de rebut vers l'auge de la vis, au-dessus de l'axe longitudinal (18) de la partie hélicoïdale cylindrique (9), sur le pourtour (19) de cette dernière, et ladite buse étant sollicitée par de l'eau qui est amenée, au moyen d'une valve de régulation (21), à une faible pression réduite, déterminée, préréglable et comprise entre 1,5 et 2,5 bar, et dont l'admission (14) est interrompue, par l'intermédiaire d'une valve de commande, lorsque le processus de convoyage (27) est interrompu ou ne se poursuit pas en direction du processus (28) de mélangeage et de compactage.

5. Dispositif selon la revendication 4, caractérisé par le fait que la buse (12) est implantée, dans la paroi (15), à l'emplacement auquel la partie hélicoïdale cylindrique (9) tourne vers le bas au cours du processus de convoyage (27).

6. Dispositif selon la revendication 4, caractérisé par le fait que l'eau est injectée par pulvérisation en une quantité dont l'unité de temps est réglée, par une valve de régulation électromagnétique remplaçant la valve de régulation (21), dont les grandeurs de réglage sont dérivées, quant à l'unité de temps, soit par un indicateur de valeurs mesurées, sur la base de la mesure de la puissance d'entraînement de la transmission de la presse (1) à vis, de préférence par l'intensité du courant électrique, soit par un mesureur quantitatif, sur la base de la mesure de la quantité des blocs comprimés (6) fabriqués, puis sont appliquées au régulateur de la valve de régulation (21) en tant que signaux électriques.

**7.** Dispositif selon la revendication 4, caractérisé par le fait que la valve de commande (22) est actionnable électromagnétiquement par l'entraînement de la presse (1) à vis, et se ferme à l'état privé de courant, en étant branchée avec privation de courant lors de l'exécution du procédé, tant à l'arrêt que lors du mouvement rétrograde de la vis convoyeuse.

**8.** Dispositif selon la revendication 4, caractérisé par le fait que, dans le cas d'un processus de convoyage scindé, la première phase du processus de convoyage (27) est exécutée par un convoyeur intercalaire qui est entraîné, disposé au-dessus de l'auge (8) de la vis et parcourt, simultanément, un trajet de fragmentation au début ou dans les limites duquel se trouve une seconde buse par l'entremise de laquelle une part de l'eau (30) est ajoutée.

# Fig. 1

# Fig. 2

# Fig. 3

## Fig. 4

15 — 15'
12
14  13  9
8
16
17
10
31
11 — 11'
5

## Fig. 5

24  21  22  14